# EUROPÄISCHE PATENTSCHRIFT

(11) **EP 1 368 900 B1**
(45) Veröffentlichungstag und Bekanntmachung des Hinweises auf die Patenterteilung: **15.09.2004**
(21) Anmeldenummer: 02714038.3
(22) Anmeldetag: 19.02.2002
(51) Int. Cl.: H04B 1/00

(54) **VERFAHREN UND VORRICHTUNG ZUR ERZEUGUNG VON MOBILFUNKSIGNALEN**
METHOD AND DEVICE FOR PRODUCING MOBILE RADIO SIGNALS
PROCEDE ET DISPOSITIF PERMETTANT DE GENERER DES SIGNAUX DE RADIOTELEPHONIE MOBILE

(30) Priorität: 15.03.2001 DE 10112575
(43) Veröffentlichungstag der Anmeldung: 10.12.2003
(73) Patentinhaber: Siemens Aktiengesellschaft, 80333 München (DE)
(72) Erfinder: WANNENMACHER, Volker, 81369 München (DE)
(86) Internationale Anmeldenummer: PCT/DE2002/000599
(87) Internationale Veröffentlichungsnummer: WO 2002/075941

(56) Entgegenhaltungen:
- EP-A- 0 800 283
- EP-A- 1 001 548
- WO-A-00/31885
- WO-A-97/30523
- WO-A-99/52221
- FERRE-PIKAL E S ET AL: "Low PM noise regenerative dividers" , FREQUENCY CONTROL SYMPOSIUM, 1997., PROCEEDINGS OF THE 1997 IEEE INTERNATIONAL ORLANDO, FL, USA 28-30 MAY 1997, NEW YORK, NY, USA,IEEE, US, PAGE(S) 478-484 XP010257476 ISBN: 0-7803-3728-X das ganze Dokument

## Beschreibung

Die vorliegende Erfindung bezieht sich auf ein Verfahren sowie eine Vorrichtung zur Erzeugung von Mobilfunksignalen, wie durch den Oberbegriff der unabhängigen Patentansprüche beschrieben.

Drahtlose Kommunikationsnetze bzw. Mobilfunknetze haben sich im laufe der letzten Jahre zu einem wesentlichen Bestandteil der Kommunikationsinfrastruktur weltweit entwickelt. Aufgrund der riesigen Nachfrage nach Mobilfunkkapazität sind verschiedene Industriestandard-Kommunikationstechniken entwickelt worden, die auf digitalen Modulationsschemata basieren. So sind beispielsweise Code-Division-Multiple-Access (CDMA), Time-Division-Multiple-Access (TDMA) sowie Frequenzsprungtechniken verwendet worden, um moderne Kommunikationssysteme zu entwickeln. Nachdem derartige Systeme parallel zueinander implementiert worden sind, hat es sich als vorteilhaft erwiesen, Empfänger vorzusehen, die in der Lage sind, mit einem oder mehreren dieser Standardtechniken zu arbeiten. Um dies zu ermöglichen, ist es notwendig, einen Empfänger vorzusehen, der in der Lage ist, Signale zu empfangen, die nach unterschiedlichen Modulationstechniken moduliert worden sind.

Insbesondere in Mitteleuropa, aber auch in anderen Regionen der Welt, ist in diesem Zusammenhang das GSM-Mobilfunksystem entwickelt worden, wobei innerhalb dieses Systemes verschiedene Frequenzbereiche angeboten werden. Hinzu kommen wird in den nächsten Jahren der Mobilfunkstandard der nächsten Generation (UMTS, 3G) der weitere Frequenzbereiche beansprucht.

Auf Seiten der Hersteller von Endgeräten wird es daher zunehmend schwieriger, mit vertretbarem Aufwand eine Signalerzeugung für die unterschiedlichen Bänder und Standards zu gewährleisten sowie umgekehrt die entsprechenden Empfangsmöglichkeiten bereitzustellen, insbesondere unter der Voraussetzung, daß die Anzahl der verwendeten Oszilllatoren und ihr erforderlicher Abstimmbereich möglichst gering gehalten werden soll.

Bekannte Empfänger zur Bearbeitung von Signalen unterschiedlicher Modulationsstandards implementieren beispielsweise die Double-Conversion-Receiver-Architecture. Die Double-Conversion-Receiver-Architecture zeichnet sich dadurch aus, daß das empfangene Funksignal auf ein Zwischenfrequenzsignal konvertiert wird und das Zwischenfrequenzsignal sodann ins Basisband abwärts konvertiert wird. Zusätzlich wird die Zwischenfrequenz auch einer Verstärkungskontrolle zugeführt. Double-Conversion-Empfänger haben jedoch den Nachteil, daß sie eine große Anzahl von Schaltkreiskomponenten benötigen, was die Kosten, die Größe und auch die Leistungsaufnahme des Empfängers vergrößert.

Eine Alternative zu diesen Double-Conversion-Empfänger sind Direct-Conversion-Empfänger, die keine Zwischenfrequenz besitzen und daher keinen Filteraufwand auf der Zwischenfrequenz notwendig machen. Zum Empfang wird aus wahlweise einem ersten lokalen Oszillator oder einem zweiten lokalen Oszillator durch einen regenerativen Teiler zwei Drittel oder vier Drittel der Oszillatorfrequenz erzeugt, die zum Abwärtsmischen des Empfangssignales ins Basisband dient.

Zum Senden wird dabei die Tatsache genutzt, daß der regenerative Teiler als "Abfallprodukt" auch ein Drittel der Oszillatorfrequenz erzeugt. Diese wird IQ-modulierten anschließend einer Offset-PLL (phase-locked-loop) zugeführt, die sie auf die eigentliche Sendefrequenz hochsetzt. Für den speziellen Anwendungsfall UMTS wird das Ausgangssignal durch Mischen mit dem ersten lokalen Oszillator erzeugt, da hier ein amplitudenmoduliertes Signal vorhanden sein muß, was mit einer Offset-PLL nicht erreicht werden kann.

Der Nachteil dieser Lösung ist, daß der erste lokale Oszillator einen weiten Abstimmbereich von 1282.5 bis 1452.5 MHz haben muß. Dies ist nicht nur schwierig zu realisieren, sondern macht unter Umständen sogar zwei getrennte Oszillatoren für die jeweiligen Teilbereiche nötig. Darüber enthält die Offset-PLL intern ebenfalls zwei Oszillatoren, die einen erheblichen Raumbedarf fordern.

Aus der Druckschrift WO 99/52221 ist eine Vorrichtung zur Erzeugung von Mobilfunksignalen mit einem Direct-Conversion-Empfänger, mit zwei lokalen Oszillatoren bekannt. Bei der Vorrichtung ist ein Teiler zur Teilung der jeweiligen Oszillatorfrequenz und ein zusätzlicher Teiler mit dem Faktor 4 vorgesehen. Allerdings ist bei dieser Vorrichtung die Frequenzwahl der Oszillatoren nicht sehr flexibel, da das Tastverhältnis auf ganzzahlige Werte begrenzt ist.

Die Aufgabe der vorliegenden Erfindung ist es daher, ein Verfahren und eine Vorrichtung der gattungsgemäßen Art vorzusehen, bei der eine möglichst kleine Anzahl von Oszillatoren zum Einsatz kommt und der erforderliche Abstimmbereich möglichst gering ist, wobei die Lösung möglichst wirtschaftlich und einfach zu realisieren sein soll.

Diese Aufgabe wird durch die Merkmale der unabhängigen Ansprüche gelöst, wobei zweckmäßige Ausführungsformen durch die Merkmale der jeweiligen Unteransprüche beschrieben sind.

Vorgesehen ist zunächst ein Verfahren zur Erzeugung von Mobilfunksignalen mit einem Direct-Conversion-Empfänger, unter Verwendung zumindest eines ersten und eines zweiten lokalen Oszillators sowie eines regenerativen Teilers zur Drittelung der jeweiligen Oszillatorfrequenz, zur Verarbeitung von Signalen, die unterschiedlichen Mobilfunkstandard entsprechen, dadurch gekennzeichnet, daß beim Senden eine Zwischenfrequenz für zumindest einen der zu verarbeitenden Mobilfunkstandards durch Viertelung eines der lokalen Oszillatoren erfolgt.

Ein derartiger Teiler mit dem Faktor 4 oder einem Vielfachen davon läßt sich in Silizium ohne großen Aufwand leicht integrieren.

Vorzugsweise ist das Verfahren nach Maßgabe der vorliegenden Erfindung derart ausgestaltet, daß wahlweise eine Frequenzdrittelung oder Frequenzviertelung erfolgen kann.

Abgesehen von den beschriebenen zwei lokalen Oszillatoren können auch eine größere Anzahl von lokalen Oszillatoren verwendet werden. Weiterhin bevorzugt wird die gedrittelte bzw. geviertelte lokale Oszillatorfrequenz IQ moduliert, wobei das modulierte Signal gemeinsam mit einem der unmodulierten lokalen Oszillatorsignalen einer Offset-PLL zugeführt werden kann oder alternativ statt einer Offset-PLL auch einem Mischer zugeführt werden kann.

Die Oszillatorfrequenzen können darüber hinaus auch um einen ganzzeiligen Faktor höher liegen als vorhergehend beschrieben, z.B. um den Faktor 2, wobei dann eine Frequenzsechstelung oder -achtelung erforderlich wäre.

Die Erfindung betrifft darüber hinaus eine Anordnung zur Erzeugung von Mobilfunksignalen, zur Durchführung des Verfahrens wie oben beschrieben.

Weitere Eigenschaften und Vorteile der vorliegenden Erfindung ergeben sich aus der folgenden Beschreibung einer bevorzugten Ausführungsform im Zusammenhang mit den beigefügten Zeichnungen; darin zeigt:
- Fig. 1: eine Ausführungsform einer Anordnung nach Maßgabe der vorliegenden Erfindung;
- Fig. 2: eine Variante der Ausführungsform nach Fig. 1.

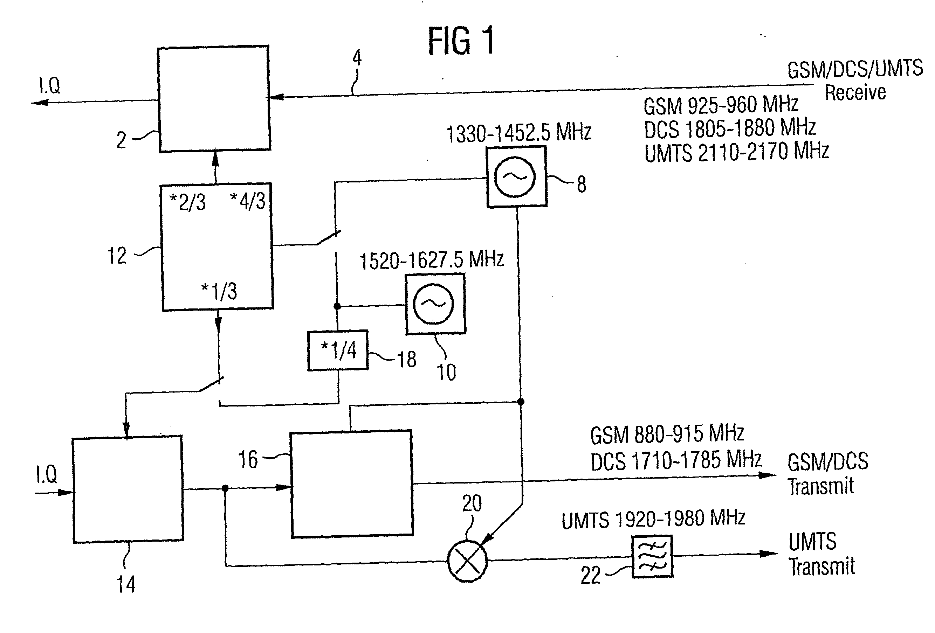

In der Fig. 1 ist eine Ausführungsform einer Anordnung zur Erzeugung von Mobilfunksignalen dargestellt. Zu erkennen ist dabei ein Direct-Conversion-Receiver 2, der keine Zwischenfrequenz besitzt und daher keinen Filteraufwand auf der Zwischenfrequenz verlangt. Bei dem Empfangssignal 4 handelt es sich in der dargestellten Ausführungsform um GSM-Signale im Bereich 925 bis 960 MHz, um DCS-Signale im Bereich 1805 bis 1880 MHz sowie um UMTS-Signale im Bereich 2110 bis 2170 MHz. Der Direct-Conversion-Receiver 2 hat darüber hinaus einen IQ-Ausgang 6. Zum Empfang wird wahlweise aus einem ersten lokalen Oszillator 8 oder einem zweiten lokalen Oszillator 10 durch einen regenerativen Teiler 12 zwei Drittel oder vier Drittel der Oszillatorfrequenz erzeugt, die zum Abwärtsmischen des Empfangssignales ins Basisband dient. Zum Senden wird auch hier die Tatsache genutzt, daß der regenerative Teiler 12 als Abfallprodukt auch ein Drittel der Oszillatorfrequenz erzeugt. Sie wird in einem IQ-Modulator 14 IQ-moduliert und anschließend einer Offset-PLL 16 zugeführt, die sie auf die eigentliche Sendefrequenz hochsetzt. Für UMTS wird das Ausgangssignal durch Mischen 20 mit dem ersten lokalen Oszillator 8 erzeugt, da hier ein Amplituden-moduliertes Signal erzeugt werden muß, was mit einer Offset-PLL nicht erreicht werden -kann.

Beim Senden wird die Zwischenfrequenz für GSM und UMTS vom regenerativen Teiler 12 durch Drittelung des zweiten lokalen Oszillators 10 erstellt, für DCS jedoch durch Viertelung des zweiten lokalen Oszillators 10. Der erste lokale Oszillator 8 muß auf diese Weise in nur noch einem Bereich von 1330 bis 1452,5 MHz abdecken und der zweite lokale Oszillator 10 einen Bereich von 1520 bis 1627,5 MHz. Die Anzahl der verwendeten Oszillatoren bleibt dabei unverändert.

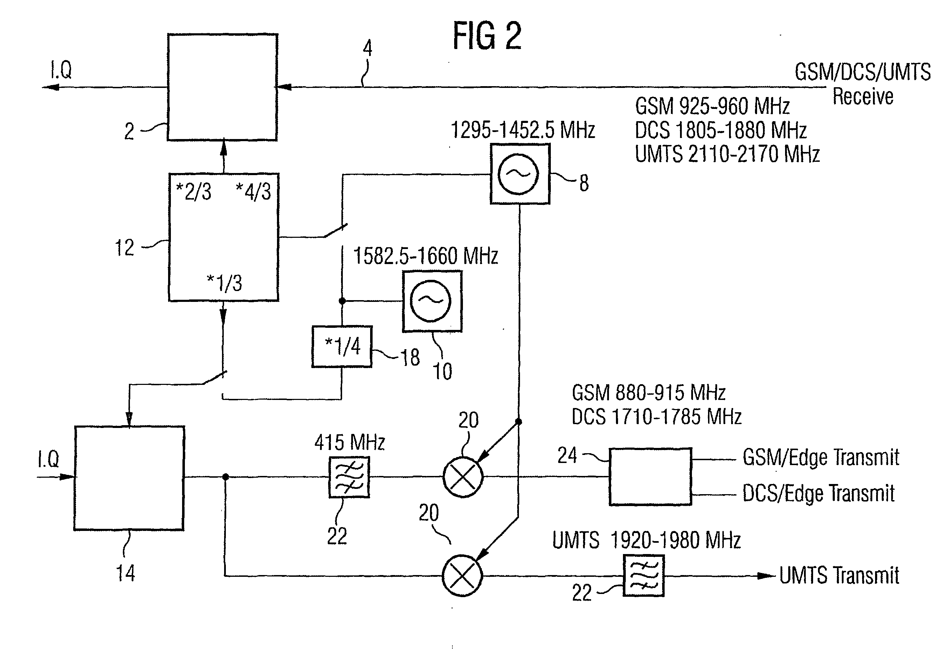

In der Fig. 2 ist eine Variante der Ausführungsform nach Fig. 1 dargestellt, wobei gleiche Elemente mit entsprechendem Bezugszeichen bezeichnet sind. In diesem Falle wird die modulierte Zwischenfrequenz in einem entsprechenden Low-pass-Filter 22 gefiltert und anschließend nicht durch eine Offset-PLL wie in der Fig. 1, sondern durch Mischen 24 mit dem ersten lokalen Oszillator 8 ins Sendeband umgesetzt. Dies ermöglicht das Senden Amplituden-modulierter Signale auch bei GSM und DCS, so daß Erweiterungen des Standards, wie z.B. Edge, mitberücksichtigt werden können. Vorteilhaft ist dabei, daß mit der Offset-PLL auch deren Oszillatoren entfallen, wobei anders als bei der Variante nach Fig. 1 Filtermaßnahmen, wie ein Diplexer 24 und eine LO-Sperre vorgesehen sind.

Mit dem dargestellten Verfahren bzw. der entsprechenden Anordnung wird mit einem vertretbaren Aufwand eine Signalerzeugung für die unterschiedlichen Bänder und Standards gewährleistet und umgekehrt eine entsprechende Empfangsmöglichkeit geschaffen, wobei die Anzahl der verwendeten Oszillatoren und ihr erforderlicher Abstimmbereich so gering wie möglich gehalten wird.

## Patentansprüche

1. Verfahren zur Erzeugung von Mobilfunksignalen mit einem Direct-Conversion-Empfänger (2), unter Verwendung zumindest eines ersten und eines zweiten lokalen Oszillators (8, 10) sowie eines regenerativen Teilers (12) zur Drittelung der jeweiligen Oszillatorfrequenz, zur Verarbeitung von Signalen, die unterschiedlichen Mobilfunkstandards entsprechen,
wobei beim Senden wahlweise eine Zwischenfrequenz für GSM und UMTS vom regenerativen Teiler (12) durch Drittelung des zweiten lokalen Oszillators (10) oder für einen der zu verarbeitenden Mobilfunkstandards durch Viertelung (18) des zweiten lokalen Oszillators (10) erstellt wird.

2. Verfahren nach Anspruch 1,
**dadurch gekennzeichnet,**
**daß** die jeweilige Oszillatorfrequenz IQ-moduliert wird.

3. Verfahren nach Anspruch 2,
**dadurch gekennzeichnet,**
**daß** das modulierte Signal gemeinsam mit einem der unmodulierten Oszillatorsignale einer Offset-PLL (16) zugeführt wird.

4. Verfahren nach Anspruch 2,
**dadurch gekennzeichnet,**
**daß** das modulierte Signal gemeinsam mit einem der unmodulierten Oszillatorsignale einem Mischer (20) zugeführt wird.

5. Vorrichtung zur Erzeugung von Mobilfunksignalen, mit einem Direct-Conversion-Empfänger (2), mit zumindest einem ersten und einem zweiten lokalen Oszillator (8, 10) und einem regenerativen Teiler (12) zur Drittelung der jeweiligen Oszillatorfrequenz,
wobei zusätzlich ein Teiler (18) mit dem Faktor 4 vorgesehen ist, welcher geeignet ist beim Senden eine Zwischenfrequenz für einen der zu verarbeitenden Mobilfunkstandards durch Viertelung des zweiten lokalen Oszillators (10) zu erstellen,
wobei der regenerative Teiler geeignet ist, beim Senden eine Zwischenfrequenz für GSM und UMTS durch Drittelung des zweiten lokalen Oszillators (10) zu erstellen.

6. Vorrichtung nach Anspruch 5,
**dadurch gekennzeichnet,**
**daß** ein IQ-Modulator (14) vorgesehen ist, durch den die gedrittelte oder geviertelte Oszillatorfrequenz moduliert wird.

7. Vorrichtung nach Anspruch 6,
**dadurch gekennzeichnet,**
**daß** eine Offset-PLL (16) zur Verarbeitung des modulierten Signales gemeinsam mit einem der unmodulierten Oszillatorsignale vorgesehen ist.

8. Vorrichtung nach Anspruch 7,
**dadurch gekennzeichnet,**
**daß** ein Mischer (20) zum Mischen des modulierten Signales gemeinsam mit einem der unmodulierten Oszillatorsignale vorgesehen ist.

## Claims

1. Method for generating mobile radio signals with a direct conversion receiver (2), using at least one first and one second local oscillator (8, 10) and also a regenerative divider (12) for dividing the respective oscillator frequency, for processing signals conforming to different mobile radio standards, whereby during transmission an intermediate frequency is optionally produced for GSM and UMTS by the regenerative divider (12) by dividing the second local oscillator (10) into three or for one of the mobile radio standards to be processed by dividing the second local oscillator (10) into four (18).

2. Method according to Claim 1,
**characterized in that**
the respective oscillator frequency is IQ-modulated.

3. Method according to Claim 2,
**characterized in that**
the modulated signal is fed jointly with one of the unmodulated local oscillator signals to an offset PLL (16).

4. Method according to Claim 2,
**characterized in that**
the modulated signal is fed jointly with one of the unmodulated oscillator signals to a mixer (20).

5. Device for generating mobile radio signals, with a direct conversion receiver (2), using at least one first and one second local oscillator (8, 10) and a regenerative divider (12) for dividing the respective oscillator frequency into three,
whereby a divider (18) having the factor 4 is additionally provided which is suitable with regard to the transmit operation for producing an intermediate frequency for one of the mobile radio standards to be processed by dividing the second local oscillator (10) into four,
whereby the regenerative divider is suitable with regard to the transmit operation for producing an intermediate frequency for GSM and UMTS by dividing the second local oscillator (10) into three.

6. Device according to Claim 5,
**characterized in that**
an IQ-modulator (14) is provided which is used to modulate the oscillator frequency which has been divided into three or four.

7. Device according to Claim 6,
**characterized in that**
an offset PLL (16) is provided for processing the modulated signal jointly with one of the unmodulated oscillator signals.

8. Device according to Claim 7,
**characterized in that**
a mixer (20) is provided for mixing the modulated signal jointly with one of the unmodulated oscillator signals.

## Revendications

1. Procédé permettant de générer des signaux de radiocommunication mobile avec un récepteur à conversion directe (2) en utilisant au moins un premier et un deuxième oscillateur local (8, 10) ainsi qu'un diviseur régénératif (12) pour diviser par trois la fréquence d'oscillateur respective pour traiter des signaux correspondant à différentes normes de radiocommunication mobile, une fréquence intermédiaire étant créée, lors de l'émission, au choix, pour le GSM et l'UMTS, par le diviseur régénératif (12) par partage en trois du deuxième oscillateur local (10) ou, pour l'une des normes de radiocommunication mobile à traiter, par partage en quatre (18) du deuxième oscillateur local (10).

2. Procédé selon la revendication 1, **caractérisé en ce que** la fréquence d'oscillateur respective subit une modulation IQ.

3. Procédé selon la revendication 2, **caractérisé en ce que** le signal modulé est amené conjointement avec l'un des signaux d'oscillateur non modulés à un circuit Offset PLL (16).

4. Procédé selon la revendication 2, **caractérisé en ce que** le signal modulé est amené conjointement avec l'un des signaux d'oscillateur non modulés à un mélangeur (20).

5. Dispositif permettant de générer des signaux de radiocommunication mobile, comportant un récepteur à conversion directe (2), au moins un premier et un deuxième oscillateur local (8, 10) ainsi qu'un diviseur régénératif (12) pour diviser par trois la fréquence d'oscillateur respective, un diviseur (18) divisant par le facteur 4 étant additionnellement prévu, lequel se prête à créer, lors de l'émission, par partage en quatre du deuxième oscillateur local (10), une fréquence intermédiaire pour l'une des normes de radiocommunication mobile à traiter, le diviseur régénératif se prêtant à créer, lors de l'émission, une fréquence intermédiaire pour le GSM et l'UMTS par partage en trois du deuxième oscillateur local (10).

6. Dispositif selon la revendication 5, **caractérisé en ce qu'**est prévu un modulateur IQ (14) par lequel est modulée la fréquence d'oscillateur divisée par trois ou par quatre.

7. Dispositif selon la revendication 6, **caractérisé en ce qu'**est prévu un circuit Offset PLL (16) pour le traitement du signal modulé conjointement avec l'un des signaux d'oscillateur non modulés.

8. Dispositif selon la revendication 7, **caractérisé en ce qu'**est prévu un mélangeur (20) pour mélanger le signal modulé ensemble avec l'un des signaux d'oscillateur non modulés.
